# EUROPEAN PATENT APPLICATION

(11) **EP 4 379 432 A1**
(43) Date of publication of application: **05.06.2024**
(21) Application number: 22849338.3
(22) Date of filing: 20.07.2022
(51) Int. Cl.: G02B 3/00, G02B 5/00, G02B 5/04, G02B 6/42

(54) **LENS COMPONENT, OPTICAL MULTIPLEXING/DEMULTIPLEXING MODULE, AND METHOD FOR MANUFACTURING OPTICAL MULTIPLEXING/DEMULTIPLEXING MODULE**

(30) Priority: 26.07.2021 JP 2021121853
(71) Applicant: Sumitomo Electric Optifrontier Co., Ltd., Yokohama-shi Kanagawa 244-8589 (JP)
(72) Inventor: MUKOJIMA, Kenta, Yokohama-shi, Kanagawa 244-8589 (JP); HATAYAMA, Hitoshi, Yokohama-shi, Kanagawa 244-8589 (JP); SHIBATA, Masahiro, Yokohama-shi, Kanagawa 244-8589 (JP)
(74) Representative: Müller-Boré & Partner Patentanwälte PartG mbB
(86) International application number: PCT/JP2022/028180
(87) International publication number: WO 2023/008276

(57) **Abstract**

A lens component includes a prism including a first surface, a second surface obliquely facing the first surface, a third surface extending in a direction that intersects with the first surface, and a first side surface and a second side surface connecting the first surface and the second surface to each other and facing each other, and a plurality of GRIN lenses arranged in the prism. Each of the plurality of GRIN lenses includes a first end that is exposed at the first surface. The lens component is configured such that light that is input to the first end of each of the plurality of GRIN lenses is reflected by the second surface and is emitted from the third surface. The first side surface and the second side surface of the prism have a curved surface shape.

## Description

### Technical Field

The present disclosure relates to a lens component, an optical multiplexing/demultiplexing module, and a method for manufacturing an optical multiplexing/demultiplexing module. This application is based upon and claims the benefit of priority from Japanese Patent Application No. 2021-121853, filed on July 26, 2021, the entire contents of which are incorporated herein by reference.

### Background Art

Patent Literature 1 discloses an optical receiving module including an optical demultiplexing device that demultiplexes wavelength multiplexed light having different wavelength components. In this optical receiving module, light with each of the wavelength components demultiplexed by the optical demultiplexing device is condensed by each corresponding lens and received by a light receiving element such as a photodiode.

### Citation List

### Patent Literature

[Patent Literature 1] Japanese Unexamined Patent Publication No. 2016-170363
[Patent Literature 2] Japanese Unexamined Patent Publication No. 2021-060433
[Patent Literature 3] Japanese Unexamined Patent Publication No. 2008-015224

### Summary of Invention

A lens component according to one aspect of the present disclosure includes a prism and a plurality of GRIN lenses (graded index lenses, gradient index lenses). The prism includes a first surface, a second surface obliquely facing the first surface, a third surface extending in a direction that intersects with the first surface and obliquely facing the second surface, and a first side surface and a second side surface connecting the first surface and the second surface to each other and facing each other. The plurality of GRIN lenses are arranged in the prism such that each lens extends from the first surface toward the second surface. The GRIN lenses each have a first end that is exposed at the first surface. The lens component is configured such that light input to the first end of each of the plurality of GRIN lenses is propagated by the plurality of GRIN lenses, is reflected by the second surface, and is emitted from the third surface, or light input from the third surface and reflected by the second surface or light directly input to the second surface is propagated by the plurality of GRIN lenses and is emitted from the first end of each of the plurality of GRIN lenses. In this lens component, the first side surface and the second side surface of the prism have a curved surface shape.

An optical multiplexing/demultiplexing module according to one aspect of the present disclosure includes a collimator, an optical multiplexing/demultiplexing device, and the above lens component. The collimator is configured to receive or output wavelength multiplexed light including a plurality of wavelength components. The optical multiplexing/demultiplexing device is optically coupled to the collimator and is configured to demultiplex the wavelength multiplexed light into light with different wavelength components or to multiplex light with different wavelength components into the wavelength multiplexed light. The lens component is optically coupled to the optical multiplexing/demultiplexing device.

A method for manufacturing an optical multiplexing/demultiplexing module according to one aspect of the present disclosure, includes preparing a collimator, an optical multiplexing/demultiplexing device, the above lens component, an alignment structure including a lens accommodating portion corresponding to a curved surface of the first side surface and the second side surface of the lens component, and a base; installing the collimator and the optical multiplexing/demultiplexing device in the base; accommodating the lens component in the alignment structure such that the first side surface and the second side surface of the lens component are located in the lens accommodating portion; and performing alignment in optical coupling of the lens component with the optical multiplexing/demultiplexing device by rotating the lens component in the lens accommodating portion.

### Brief Description of Drawings

FIG. 1 is a perspective view showing an optical multiplexing/demultiplexing module according to one embodiment.
FIG. 2 is a top view of the optical multiplexing/demultiplexing module shown in FIG. 1, viewed from above.
FIG. 3 is a view for explaining the demultiplexing or multiplexing of light in the optical multiplexing/demultiplexing module shown in FIG. 1.
FIG. 4 is a view for explaining the demultiplexing or multiplexing of light in the optical multiplexing/demultiplexing module shown in FIG. 1.
FIG. 5 is a perspective view showing a lens component according to one embodiment.
FIG. 6 is a front view of the lens component shown in FIG. 5, viewed from the front.
FIG. 7 is an exploded perspective view for explaining a method of assembling the optical multiplexing/demultiplexing module shown in FIG. 1.
FIG. 8 is a front view showing a step following the step shown in FIG. 7.
FIG. 9 is an enlarged view of the optical multiplexing/demultiplexing module shown in FIG. 1.
FIG. 10 is a view for explaining the multiplexing of light in the optical multiplexing/demultiplexing module according to one embodiment.
FIG. 11 is a view for explaining a method for aligning a lens array of the related art.

### Description of Embodiments

### [Problems to be solved by the present disclosure]

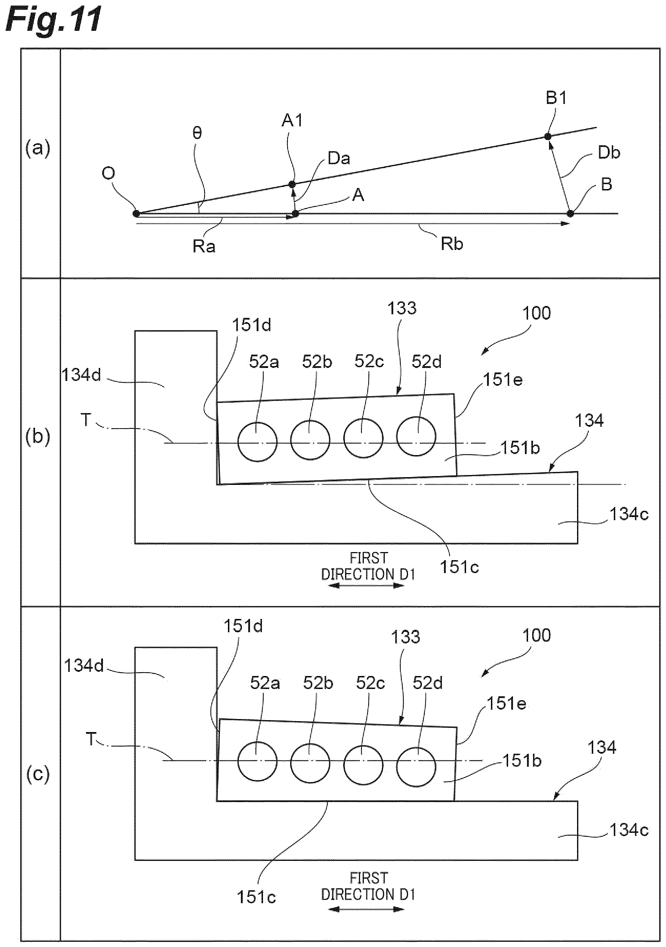

The lens that condenses the light with each of the wavelength components emitted from the optical demultiplexing device onto the light receiving element is often an array-shaped lens component having a plurality of lenses, and is generally a rectangular parallelepiped-shaped lens component. In a case where such a lens component is aligned, for example, as shown in FIG. 11, the condensing lens is aligned with one side surface and bottom surface as a reference. However, in this case, if the reference plane of an alignment jig is slightly deviated, the amount of deviation increases as the distance from the reference plane increases, causing a difference in the alignment state between the lenses. For example, a large difference in the alignment state occurs between the reference lens on the side surface and the lens farthest from the side surface. If the difference in the alignment state occurs between the lenses in this way, the performance of the optical demultiplexing device becomes unstable. The same applies to a case where an optical multiplexing device is used.

### [Effects of the present disclosure]

According to the present disclosure, the alignment of the array-shaped lens component can be performed in a well-balanced manner between the lenses.

### [Description of embodiment of the present disclosure]

First, the content of an embodiment of the present disclosure will be listed and described. A lens component according to one embodiment includes a prism and a plurality of GRIN lenses. The prism includes a first surface, a second surface obliquely facing the first surface, a third surface extending in a direction that intersects with the first surface and obliquely facing the second surface, and a first side surface and a second side surface connecting the first surface and the second surface to each other and facing each other. The plurality of GRIN lenses are arranged in the prism such that each lens extends from the first surface toward the second surface. The GRIN lenses each include a first end that is exposed at the first surface. The lens component is configured such that light input to the first end of each of the plurality of GRIN lenses is propagated by the plurality of GRIN lenses, is reflected by the second surface, and is emitted from the third surface, or light input from the third surface and reflected by the second surface or light directly input to the second surface is propagated by the plurality of GRIN lenses and is emitted from the first end of each of the plurality of GRIN lenses. In this lens component, the first side surface and the second side surface of the prism have a curved surface shape.

In this lens component, the first side surface and the second side surface of the prism having the plurality of GRIN lenses therein have a curved surface shape. In this case, since the first side surface and the second side surface have a curved surface shape, it is possible to align each of the plurality of GRIN lenses included in the lens component while supporting both side surfaces by an external member (the alignment structure) for performing alignment. That is, both side surfaces of the lens component can be used as the reference surface for alignment. As a result, according to this lens component, the alignment of the lens component having the plurality of GRIN lenses can be performed in a well-balanced manner between the lenses.

In one embodiment of the lens component, the first side surface and the second side surface may have the same radius of curvature. In this case, since both side surfaces can be supported more uniformly by the alignment structure for performing alignment, the alignment of the lens component having the plurality of GRIN lenses can be performed in a more well-balanced manner. In this case, a center of a circular arc that defines the first side surface and a center of a circular arc that defines the second side surface may coincide with each other, and the centers may be located in the prism or in any one GRIN lens of the plurality of GRIN lenses.

In one embodiment of the lens component, each of the plurality of GRIN lenses may have a second end that is exposed at the second surface. In this case, light can be more efficiently reflected by the second surface.

In one embodiment of the lens component, a radius of curvature of each of the first side surface and the second side surface may be 0.2 mm or more and 5.0 mm or less. In one embodiment of the lens component, a diameter of each of the plurality of GRIN lenses is 0.1 mm or more and 0.6 mm or less. In one embodiment of the lens component, the shortest distance between the outermost GRIN lens of the plurality of GRIN lenses and the first side surface may be 0.0 mm or more and 5.0 mm or less. In these cases, the lens component can be downsized.

Further, an optical multiplexing/demultiplexing module according to one embodiment includes a collimator, an optical multiplexing/demultiplexing device, and any one of the above lens components. The collimator is configured to receive or output wavelength multiplexed light including a plurality of wavelength components. The optical multiplexing/demultiplexing device is optically coupled to the collimator and is configured to demultiplex the wavelength multiplexed light into light with different wavelength components or to multiplex light with different wavelength components into the wavelength multiplexed light. The lens component is optically coupled to the optical multiplexing/demultiplexing device.

In this optical multiplexing/demultiplexing module, since the alignment of the lens component is performed in a well-balanced manner between the lenses, the light with each of the wavelength components that have been optically multiplexed and demultiplexed or the multiplexed light is stable. Therefore, a product with stable performance can be obtained.

One embodiment of the optical multiplexing/demultiplexing module may further include an alignment structure configured to support the lens component and align the plurality of GRIN lenses. The alignment structure may have a curved surface portion corresponding to a curved surface of the first side surface and the second side surface of the lens component. In this case, the alignment of the lens component can be performed in a more well-balanced manner. In this embodiment, the curved surface portion of the alignment structure may have a circular shape with one part cut off, and a radius of the circular shape may be 0.2 mm or more and 5.0 mm or less. As a result, the alignment can be performed in a well-balanced manner in the downsized optical multiplexing/demultiplexing module. Further, the curved surface portion of the alignment structure may include a support area that comes into contact with and supports the first side surface and the second side surface of the lens component when the alignment structure supports the lens component, and a non-contact area that does not come into contact with the lens component when the alignment structure supports the lens component. As a result, it is possible to secure an area that rotates when the lens component is supported from the side surface to be rotationally aligned, and thus it possible to perform the alignment more easily and reliably.

One embodiment of the optical multiplexing/demultiplexing module may further include a plurality of light receiving elements corresponding to each of the plurality of GRIN lenses. Each of the plurality of light receiving elements may be disposed to face the third surface, and may receive the light that is condensed by each of the plurality of GRIN lenses, is reflected by the second surface, and is emitted from the third surface. In this case, since the alignment of the lens component is performed in a well-balanced manner, the light emitted from the third surface can be efficiently received by the plurality of light receiving elements corresponding to each of the plurality of GRIN lenses. Therefore, a product with stable performance can be obtained.

One embodiment of the optical multiplexing/demultiplexing module may further include a plurality of light emitting elements corresponding to each of the plurality of GRIN lenses. Each of the plurality of light emitting elements may be disposed to face the second surface or the third surface, and may allow light to be input to the second surface or the third surface and the light to be emitted from the first end of each of the plurality of GRIN lenses. In this case, since the alignment of the lens component is performed in a well-balanced manner, the light can be input to the second surface or the third surface and the light can be efficiently emitted from the first end by the plurality of light emitting elements corresponding to each of the plurality of GRIN lenses. Therefore, a product with stable performance can be obtained.

Further, a method for manufacturing an optical multiplexing/demultiplexing module according to one embodiment, includes preparing a collimator, an optical multiplexing/demultiplexing device, the lens component according to any one of the above embodiments, an alignment structure having a lens accommodating portion corresponding to a curved surface of the first side surface and the second side surface of the lens component, and a base; installing the collimator and the optical multiplexing/demultiplexing device in the base; accommodating the lens component in the alignment structure such that the first side surface and the second side surface of the lens component are located in the lens accommodating portion; and performing alignment in optical coupling of the lens component with the optical multiplexing/demultiplexing device by rotating the lens component in the lens accommodating portion.

Further, in the method for manufacturing the optical multiplexing/demultiplexing module, the alignment of the lens component is performed while supporting both side surfaces thereof using the lens component of which both side surfaces have a curved surface shape and the alignment structure that has the lens accommodating portion corresponding to both curved side surfaces having the curved surface shape. In this case, both side surfaces of the lens component can be used as the reference surface for alignment. As a result, according to the method for manufacturing the optical multiplexing/demultiplexing module, the alignment of the lens component having the plurality of GRIN lenses can be performed in a well-balanced manner between the lenses. Further, in this embodiment, the lens accommodating portion of the alignment structure may have a curved surface portion corresponding to the first side surface and the second side surface. In this case, since the alignment is performed between the curved surfaces, the alignment of the lens component can be performed more precisely, and the alignment of the lens component having the plurality of GRIN lenses can be performed with high accuracy.

In one embodiment of the method for manufacturing the optical multiplexing/demultiplexing module described above, the alignment structure may be provided in a part of the base. In this case, since the alignment structure is provided in the base in which the collimator and the optical multiplexing/demultiplexing device that constitute the optical multiplexing/demultiplexing module are installed, the alignment of the lens component with respect to the optical multiplexing/demultiplexing device can be performed with higher accuracy.

### [Details of embodiments of the present disclosure]

Specific examples of a lens component and an optical multiplexing/demultiplexing module according to the present disclosure will be described below with reference to the drawings. The present invention is not limited to these examples, but is defined by the scope of the claims, and is intended to include meanings equivalent to the scope of the claims and all modifications within the scope. In the following description, the same elements will be denoted by the same reference signs in the description of the drawings, without redundant description.

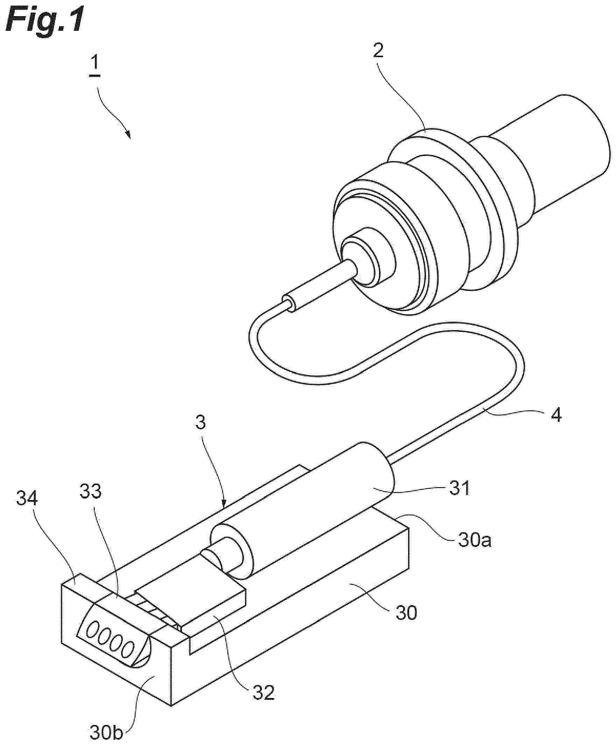

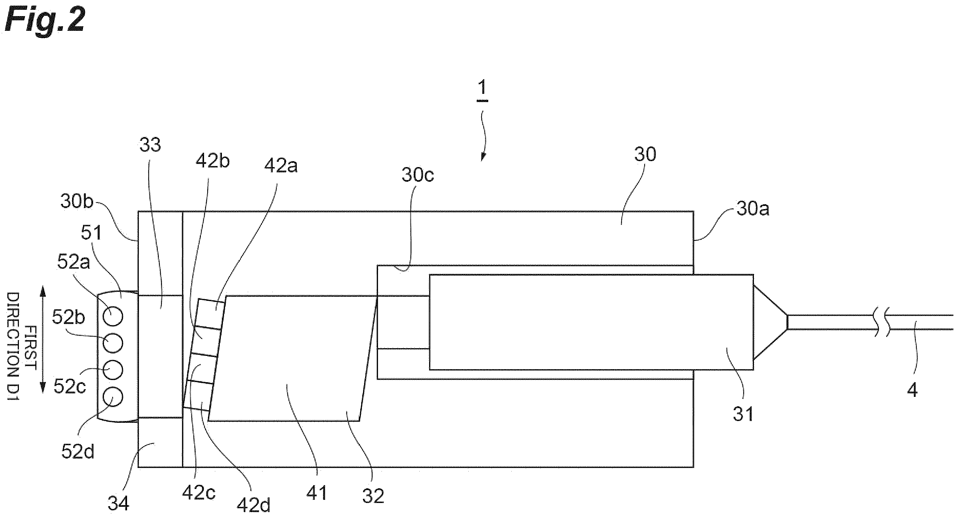

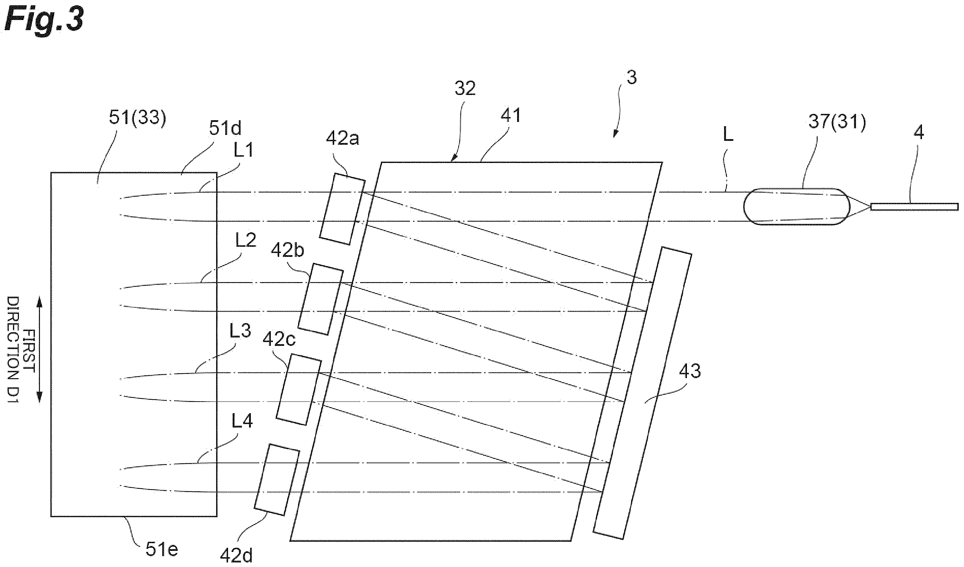

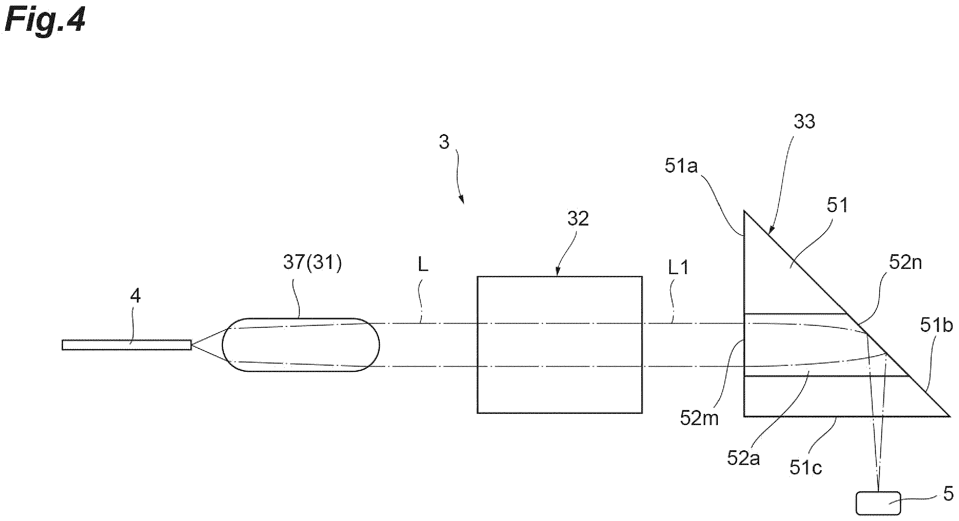

The overall configuration of an optical multiplexing/demultiplexing module according to the present embodiment will be described using FIGS. 1 to 4. FIG. 1 is a perspective view showing an optical multiplexing/demultiplexing module according to one embodiment. FIG. 2 is a top view of the optical multiplexing/demultiplexing module shown in FIG. 1, viewed from above. FIGS. 3 and 4 are views for explaining the demultiplexing or multiplexing of light in the optical multiplexing/demultiplexing module shown in FIG. 1. As shown in FIGS. 1 and 2, an optical multiplexing/demultiplexing module 1 includes an optical receptacle 2, an optical multiplexer/demultiplexer 3, and an optical fiber 4. The optical receptacle 2 is optically coupled to the optical multiplexer/demultiplexer 3 by means of the optical fiber 4. In the optical multiplexing/demultiplexing module 1, when wavelength multiplexed light including a plurality of wavelength components is input via the optical receptacle 2, the optical multiplexer/demultiplexer 3 demultiplexes the wavelength multiplexed light into light with the wavelength components. The light including the plurality of demultiplexed wavelength components is detected by the plurality of light receiving elements 5 corresponding to each wavelength component (see FIG. 4). The optical multiplexing/demultiplexing module 1 can also perform multiplexing in the reverse flow of the demultiplexing.

When the light L including the plurality of wavelength components is input, the optical receptacle 2 emits the light L toward the optical multiplexer/demultiplexer 3 via the optical fiber 4. The optical receptacle 2 is, for example, an LC receptacle. One end of the optical fiber 4 is connected to the optical receptacle 2, and the other end of the optical fiber 4 is connected to the optical multiplexer/demultiplexer 3.

The optical multiplexer/demultiplexer 3 demultiplexes each of the plurality of wavelength components included in the light L emitted from the optical receptacle 2. The optical multiplexer/demultiplexer 3 emits this demultiplexed light toward the light receiving elements 5, which will be described below. The optical multiplexer/demultiplexer 3 includes a base 30, a collimator 31, an optical multiplexing/demultiplexing device 32, and a lens component 33. The optical multiplexer/demultiplexer 3 can also multiplex the light including the plurality of wavelength components.

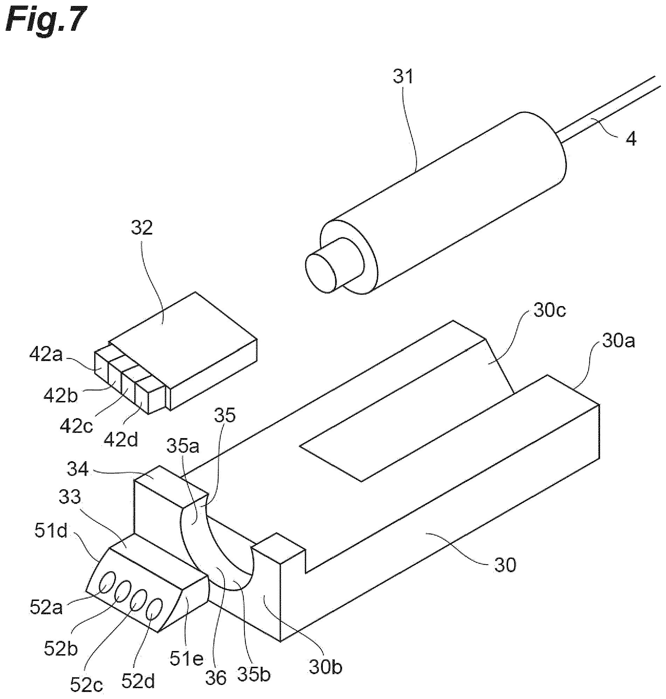

The base 30 accommodates the collimator 31, the optical multiplexing/demultiplexing device 32, and the lens component 33 (hereinafter sometimes simply referred to as "optical components"). The base 30 has a substantially rectangular parallelepiped shape as a whole, and extends in an extending direction from a first end 30a toward a second end 30b. A V-shaped groove 30c for accommodating the collimator 31 is provided from the first end 30a of the base 30 toward the center thereof. Further, an alignment unit 34 is provided in a part of the base 30. More specifically, the alignment unit 34 is an alignment structure provided at the second end 30b of the base 30. The alignment unit 34 has a lens accommodating portion 36 that accommodates the lens component 33. The lens accommodating portion 36 is configured to include a curved surface portion 35 corresponding to the curved surfaces of a first side surface 51d and a second side surface 51e of the lens component 33 (see FIG. 7). More specifically, the curved surface portion 35 may have a circular shape with one part cut off, and the radius of this circular shape may be 0.2 mm or more and 5.0 mm or less. The curved surface portion 35 is configured to include a support area 35a that comes into contact with and supports the first side surface 51d and the second side surface 51e of the lens component 33 when the alignment unit 34 supports the lens component 33, and a non-contact area 35b that does not come into contact with the lens component 33 when the alignment unit 34 supports the lens component 33. Further, the base 30 accommodates optical components of the collimator 31, the optical multiplexing/demultiplexing device 32, and the lens component 33 in that order from the first end 30a toward the second end 30b. Hereinafter, the direction orthogonal to the extending direction of the base 30 from the first end 30a toward the second end 30b when viewed in the direction shown in FIG. 2 may be referred to as a "first direction D1."

The collimator 31 is configured to receive the light L (the wavelength multiplexed light) including the plurality of wavelength components. In the present embodiment, the collimator 31 collimates the light L propagated from the optical fiber 4 and emits the collimated light toward the optical multiplexing/demultiplexing device 32. The collimator 31 is connected to the other end of the optical fiber 4. The collimator 31 is accommodated in the V-shaped groove 30c of the base 30. As shown in FIGS. 3 and 4, the collimator 31 includes a collimating lens 37 that converts light into collimated light.

The optical multiplexing/demultiplexing device 32 is optically coupled to the collimator 31 and demultiplexes the light L into light with different wavelength components. The optical multiplexing/demultiplexing device 32 demultiplexes each of the plurality of wavelength components included in the light L emitted from the collimator 31. The optical multiplexing/demultiplexing device 32 is disposed between the collimator 31 and the lens component 33 in the base 30. The optical multiplexing/demultiplexing device 32 includes a main body 41, four wavelength selection filters 42a, 42b, 42c, and 42d, and a high reflection film 43.

The main body 41 is a portion that becomes a base body of the optical multiplexing/demultiplexing device 32. The main body 41 is a substantially rectangular parallelepiped-shaped member made of a member that is transparent to the wavelength of the target light. Each of the wavelength selection filters 42a to 42d is disposed on the main body 41 closer to the lens component 33. The wavelength selection filters 42a to 42d are wavelength selection filters having different light transmission characteristics, and are disposed in the first direction D1. Each wavelength selection filter can be formed of, for example, a dielectric multilayer film. By adjusting the material and thickness of the dielectric film, the optical demultiplexing characteristics of the wavelength selection filters are adjusted.

The high reflection film 43 is provided on the main body 41 closer to the collimator 31. The high reflection film 43 reflects the light transmitted through the main body 41 and guides the light toward each of the wavelength selection filters 42a to 42d. For example, the high reflection film 43 is provided at a position facing each of the wavelength selection filters 42b to 42d. The portion where the high reflection film 43 is not provided serves as an input port for the light L emitted from the collimator 31.

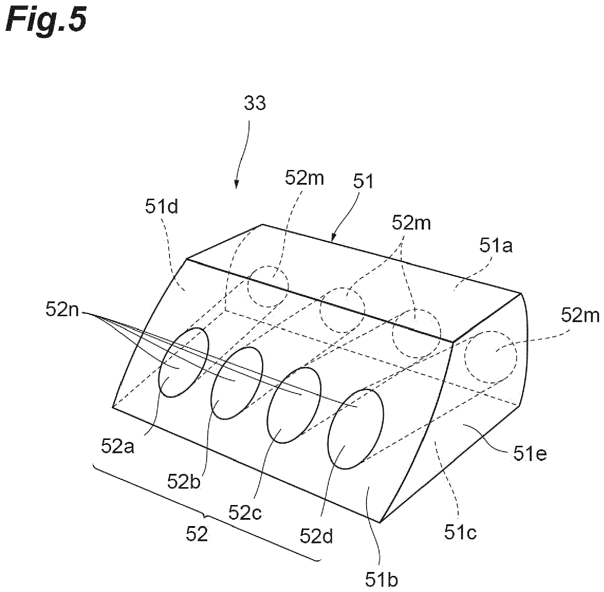

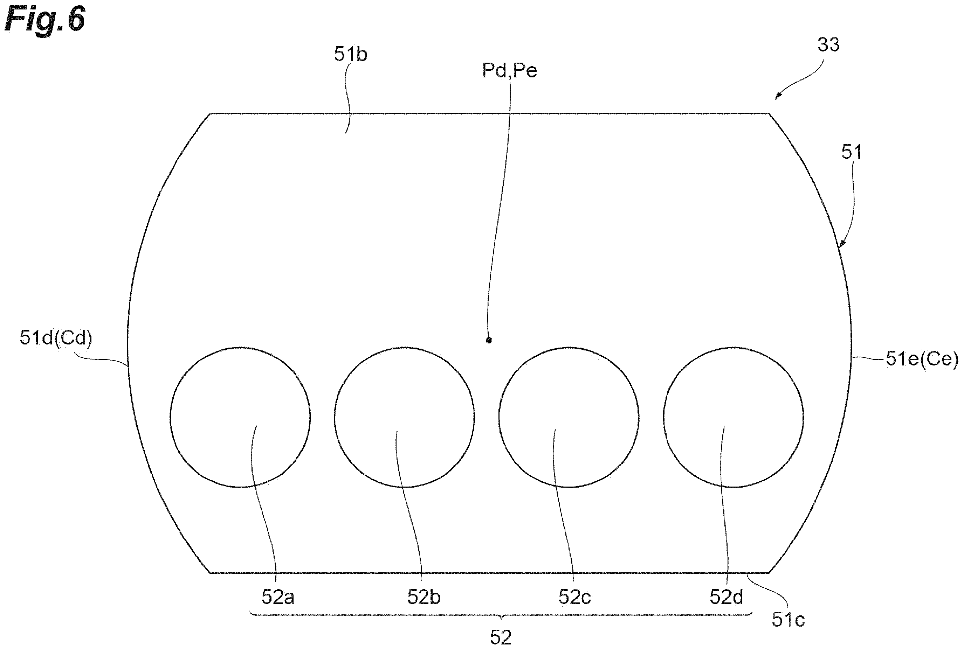

The lens component 33 is optically coupled to the optical multiplexing/demultiplexing device 32. The lens component 33 condenses the light emitted from the optical multiplexing/demultiplexing device 32 and guides the condensed light toward the light receiving element 5. The lens component 33 is accommodated in the lens accommodating portion 36 of the alignment unit 34 in the base 30. As shown in FIGS. 5 and 6, the lens component 33 has a prism 51 and four GRIN lenses 52a, 52b, 52c, and 52d.

The prism 51 is a member that guides the light emitted from the optical multiplexing/demultiplexing device 32 toward the light receiving element 5, and has a shape such as a triangular prism, for example. In the example shown in FIG. 5, a part (an upper part) of a triangular prism is cut off. Such a prism 51 has a first surface 51a facing the optical multiplexing/demultiplexing device 32, a second surface 51b obliquely facing the first surface 51a, a third surface 51c extending in a direction that intersects with the first surface 51a (is orthogonal to the first surface 51a in the present embodiment) and facing the light receiving element 5, and a first side surface 51d and a second side surface 51e connecting the first surface 51a and the second surface 51b to each other. The first surface 51a, the second surface 51b, and the third surface 51c are planar. On the other hand, the first side surface 51d and the second side surface 51e are curved surfaces facing each other.

Each of the GRIN lenses 52a, 52b, 52c, and 52d (hereinafter sometimes simply referred to as "GRIN lenses") is a gradient index lens for condensing the light emitted from the optical multiplexing/demultiplexing device 32. The GRIN lenses are arranged within the prism 51 in the first direction D1. That is, in the lens component 33 of the present embodiment, the GRIN lenses 52a to 52d are integrated with the prism 51. The GRIN lenses extend from the first surface 51a toward the second surface 51b. Each of the GRIN lenses 52a to 52d has a first end 52m exposed at the first surface 51a and a second end 52n exposed at the second surface 51b. The second end 52n is an inclined surface similarly to the second surface 51b.

As shown in FIG. 4, the plurality of light receiving elements 5 receive the light emitted from the optical multiplexer/demultiplexer 3. Each of the plurality of light receiving elements 5 corresponds to GRIN lenses 52a to 52d. That is, the plurality of light receiving elements 5 are disposed in the first direction D1. Each of the plurality of light receiving elements 5 is disposed to face the third surface 51c of the prism 51. Each of the plurality of light receiving elements 5 receives light that is condensed by each of the GRIN lenses 52a to 52d and is reflected by the second surface 51b.

Now, returning to FIG. 3, the description will be continued. FIG. 3 illustrates an optical path of the light L including wavelength components of different wavelengths λ1 to λ4. As shown in FIG. 3, the light L emitted from the optical fiber 4 is collimated by the collimating lens 37. Subsequently, the light L is input into the main body 41 from the input port of the optical multiplexing/demultiplexing device 32 (the portion where the high reflection film 43 is not provided) and is directed toward the wavelength selection filter 42a. Then, only light L1 having the wavelength component of the wavelength λ1 of the light L is transmitted through the wavelength selection filter 42a and is emitted from the optical multiplexing/demultiplexing device 32. The light L having other wavelength components is reflected by the wavelength selection filter 42a and is directed toward the high reflection film 43.

The high reflection film 43 reflects the light L toward the wavelength selection filter 42b. Then, only light L2 having the wavelength component of the wavelength λ2 of the light L is transmitted through the wavelength selection filter 42b and is emitted from the optical multiplexing/demultiplexing device 32. The light L having other wavelength components is reflected by the wavelength selection filter 42b and is directed toward the high reflection film 43.

The high reflection film 43 reflects the light L toward the wavelength selection filter 42c. Then, only light L3 having the wavelength component of the wavelength λ3 of the light L is transmitted through the wavelength selection filter 42c and is emitted from the optical multiplexing/demultiplexing device 32. The light L having other wavelength components is reflected by the wavelength selection filter 42c and is directed toward the high reflection film 43.

The high reflection film 43 reflects the light L toward the wavelength selection filter 42d. Then, light L4 having the wavelength component of the wavelength λ4 is transmitted through the wavelength selection filter 42d and is emitted from the optical multiplexing/demultiplexing device 32. Through such an optical path, the light L including four wavelength components (λ1 to λ4) is demultiplexed into the light L1, the light L2, the light L3, and the light L4 having each wavelength component, and is emitted from the optical multiplexing/demultiplexing device 32.

In FIG. 4, of the light emitted from the optical multiplexing/demultiplexing device 32, only the light L1 is illustrated, and the light L2, the light L3, and the light L4 other than the light L1 are omitted. As shown in FIG. 4, the light L1 emitted from the optical multiplexing/demultiplexing device 32 is input to the first end 52m of the GRIN lens 52a. Further, the light L1 is reflected by the second surface 51b and is emitted from the third surface 51c. The light L1 emitted from the third surface 51c is guided to the light receiving element 5. The optical paths of the light L2, the light L3, and the light L4 emitted from the optical multiplexing/demultiplexing device 32 are the same as the optical path of the light L1, and thus a detailed description will be omitted, but each of the light L2, the light L3, and the light L4 emitted from the optical multiplexing/demultiplexing device 32 is input to each first end 52m of the GRIN lenses 52b, 52c, and 52d and is guided to the corresponding light receiving elements 5.

The lens that condenses the light with each wavelength component emitted from the optical demultiplexing device onto the light receiving element is often an array-shaped lens component having a plurality of lenses, and is generally a rectangular parallelepiped-shaped lens component. In a case where such a lens component is aligned, for example, as shown in FIG. 11, the condensing lens is aligned with one side surface and bottom surface as a reference. However, in this case, if the reference plane of an alignment jig is slightly deviated, the amount of deviation increases as the distance from the reference plane increases, causing a difference in the alignment accuracy between the lenses. If the alignment accuracy of each lens is deviated, the performance of the optical demultiplexing device will become unstable. The same applies to a case where an optical multiplexing device is used. On the other hand, the optical multiplexing/demultiplexing module 1 includes the lens component 33 having the following configuration from the viewpoint of improving the alignment accuracy. The configuration of this lens component 33 will be described in detail below.

The configuration of the lens component 33 will be described in more detail using FIGS. 5 and 6 again. FIG. 5 is a perspective view showing a lens component according to one embodiment. FIG. 6 is a front view of the lens component shown in FIG. 5, viewed from the front. As shown in FIGS. 5 and 6, the lens component 33 is a lens component in which a plurality of GRIN lenses 52 are arranged in an array. The first side surface 51d and the second side surface 51e of the prism 51 are formed to have a curved surface shape. More specifically, the first side surface 51d and the second side surface 51e of the prism 51 are formed to be curved surfaces having the same radius of curvature. Moreover, the center Pd of a circular arc Cd that defines the first side surface 51d and the center Pe of a circular arc Ce that defines the second side surface 51e coincide with each other. The centers Pd and Pe are located within the prism 51. The curved surface portion 35 of the alignment unit 34 that supports the lens component 33 is formed in a concentric circular shape with the centers Pd and Pe as the center of a circular arc. The radius of curvature of each of the first side surface 51d and the second side surface 51e of the prism 51 may be 0.2 mm or more and 5.0 mm or less. The diameter of each GRIN lens may be 0.1 mm or more and 0.6 mm or less. Further, the distance (the shortest distance) between the outer periphery of the outermost GRIN lens and the first side surface 51d or the second side surface 51e may be 0.0 mm or more and 5.0 mm or less.

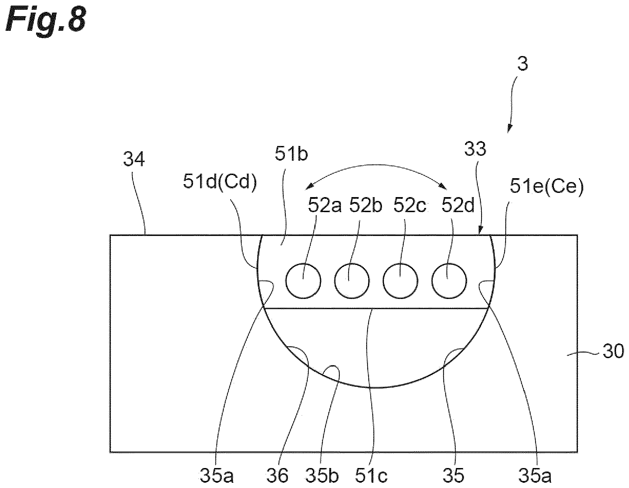

Subsequently, a method for manufacturing the optical multiplexing/demultiplexing module 1 described above will be described using FIGS. 7 and 8. FIG. 7 is an exploded perspective view for explaining a method of assembling the optical multiplexing/demultiplexing module. FIG. 8 is a front view showing a step following the step shown in FIG. 7. First, as shown in FIG. 7, the base 30, the collimator 31 including the collimating lens 37, the optical multiplexing/demultiplexing device 32, and the lens component 33 are prepared. As described above, the second end 30b of the base 30 is provided with the alignment unit 34 having the lens accommodating portion 36. Subsequently, the collimator 31 and the optical multiplexing/demultiplexing device 32 are disposed on the base 30. At this time, the collimator 31 and the optical multiplexing/demultiplexing device 32 are aligned such that their optical axes coincide with each other.

Subsequently, the lens component 33 is accommodated in the lens accommodating portion 36 of the alignment unit 34, and as shown in FIG. 8, alignment in optical coupling of the lens component 33 to the optical multiplexing/demultiplexing device 32 is performed by rotating the lens component 33 in the lens accommodating portion 36. As described above, the lens component 33 is rotatably accommodated within the lens accommodating portion 36. More specifically, the lens component 33 is rotatable within the lens accommodating portion 36 around an axis in the extending direction. As described above, the curved surface portion 35 of the lens accommodating portion 36 corresponds to the curved surfaces of the first side surface 51d and the second side surface 51e of the lens component 33. The first side surface 51d and the second side surface 51e of the lens component 33 are in contact with the curved surface portion 35 of the lens accommodating portion 36. With this configuration, the angle of the lens component 33 can be adjusted such that the light L1, the light L2, the light L3, and the light L4 emitted from each wavelength selection filter of the optical multiplexing/demultiplexing device 32 can be input to the lens component 33 with high efficiency. Since the first side surface 51d and the second side surface 51e of the lens component 33 have a curved surface shape, and the lens accommodating portion 36 has the curved surface portion 35 corresponding to the first side surface 51d and the second side surface 51e, when the lens component 33 is aligned as shown in FIG. 8, the lens component 33 is firmly supported by the lens accommodating portion 36, and the alignment can be easily performed. In other words, the lens component 33 is supported by the lens accommodating portion 36 even if it is not supported from below.

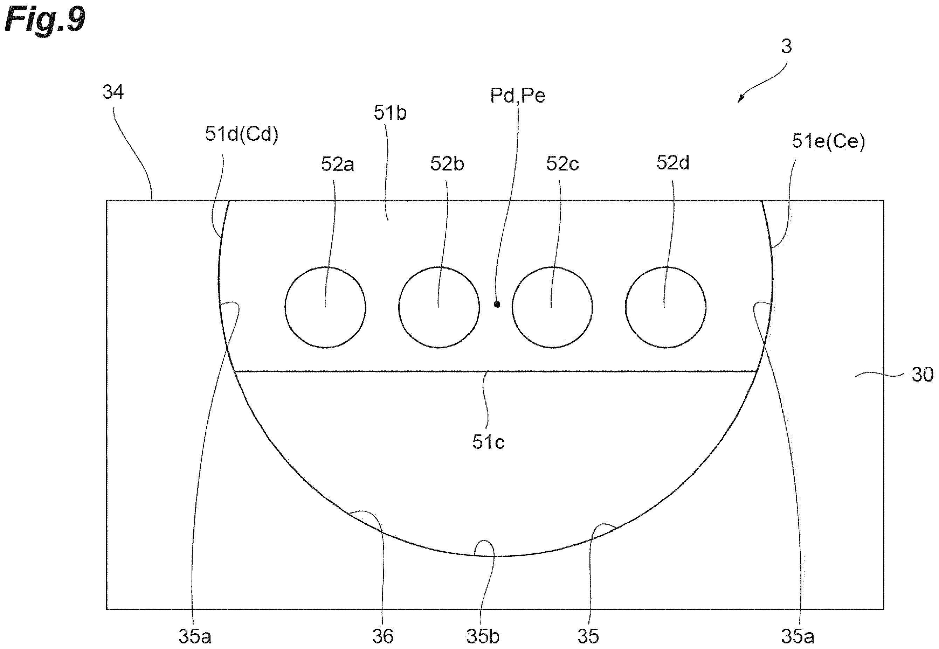

Subsequently, the step of aligning the lens component 33 will be described in more detail using FIG. 9. FIG. 9 is an enlarged view of the optical multiplexing/demultiplexing module 1 shown in FIG. 8. As described above, the first side surface 51d and the second side surface 51e of the lens component 33 are formed in a concentric circular shape with the centers Pd and Pe as the centers of the circular arcs Cd and Ce. Further, the curved surface portion 35 of the lens accommodating portion 36 corresponds to the curved surfaces of the first side surface 51d and the second side surface 51e of the lens component 33. Therefore, the curved surface portion 35 of the lens accommodating portion 36 are formed in a concentric circular shape with the centers Pd and Pe of the first side surface 51d and the second side surface 51e as the center of the circular arc. In the present embodiment, the centers Pd and Pe are located within the prism 51.

In the optical multiplexing/demultiplexing module 1 having such a configuration, the lens component 33 can be rotated with the centers Pd and Pe as the center of rotation. That is, the contact surfaces between both side surfaces of the lens component 33 and the alignment unit 34 can be made a concentric circular shape with the centers Pd and Pe of the prism 51 as the center. As a result, the position of the lens component 33 with respect to the optical multiplexing/demultiplexing device 32 can be determined in a vertical direction and a horizontal direction of FIG. 9. In addition, if the position of the lens component 33 is deviated, the lens component 33 will be deviated in a rotation direction with the centers Pd and Pe as the center of rotation. In this case, compared to the case where one of both side surfaces is used as a reference plane for alignment, manufacturing errors due to design tolerances of the prism 51 or the alignment unit 34 can be suppressed to about half.

Here, the effects of the lens component 33, the optical multiplexing/demultiplexing module 1, and the method for manufacturing the optical multiplexing/demultiplexing module 1 according to the present embodiment will be described in comparison with a comparative example. First, an optical multiplexing/demultiplexing module 100 according to the comparative example will be described using FIG. 11. As shown in part (a) of FIG. 11, a reference point O, a point A separated from the reference point O by a distance Ra, and a point B separated by a distance Rb from the reference point O are considered. Each of the reference point O, the point A, and the point B is located on the same straight line LN. Further, a point A1 separated from the reference point O by the distance Ra, and a point B1 separated by the distance Rb from the reference point O are considered. Each of the reference point O, the point A1, and the point B1 is located on the same straight line LN1. The straight line LN1 is deviated from the straight line LN by an angular tolerance θ. At this time, a tolerance Db between the point B and the point B1 is naturally larger than a tolerance Da between the point A and the point A1.

As shown in part (b) of FIG. 11, the optical multiplexing/demultiplexing module 100 according to the comparative example includes a lens component 133 having a prism, and also includes an alignment unit 134. A first side surface 151d and a second side surface 151e of this lens component 133 have a planar shape and does not have a curved surface shape. Further, the alignment unit 134 has substantially an L shape as a whole. The alignment unit 134 has a bottom portion 134c extending in a first direction D1, and an upright portion 134d extending perpendicularly from one end of the bottom portion 134c. When the lens component 133 is aligned, a third surface 151c of a prism 151 is brought into contact with the bottom portion 134c of the alignment unit 134, and the first side surface 151d of the prism 151 is brought into contact with the upright portion 134d of the alignment unit 134. As a result, the alignment of the lens component 133 with respect to an optical multiplexing/demultiplexing device 132 is performed. In other words, in the optical multiplexing/demultiplexing module 100, the third surface 151c and the first side surface 151d of the prism 151 are used as reference surfaces for alignment.

In such a configuration, the bottom portion 134c and the upright portion 134d of the alignment unit 134 may be formed to be slightly deviated from the perpendicular. In this case, as shown in part (a) of FIG. 11 described above, a difference between a reference position T serving as a reference for alignment and each GRIN lens increases as the distance from the upright portion 134d increases. Furthermore, as in the example shown in part (c) of FIG. 11, the third surface 151c and the first side surface 151d of the prism 151 may be formed to be slightly deviated from the perpendicular. Also in this case, the difference between the reference position T serving as a reference for alignment and each GRIN lens increases as the distance from the upright portion 134d increases. Therefore, in the optical multiplexing/demultiplexing module 100 according to the comparative example, it may be difficult to align the lens component 133 without increasing the deviation between the lenses.

On the other hand, in the lens component 33 according to the present embodiment, the first side surface 51d and the second side surface 51e of the prism 51 having the plurality of GRIN lenses 52 therein have a curved surface shape. In this case, since the first side surface 51d and the second side surface 51e have a curved surface shape, it is possible to align each of the plurality of GRIN lenses 52 included in the lens component 33 while supporting both side surfaces by an external member (the alignment unit 34) for performing alignment. That is, both side surfaces of the lens component 33 can be used as the reference surface for alignment. As a result, according to this lens component 33, the alignment of the lens component 33 having the plurality of GRIN lenses 52 can be performed in a well-balanced manner between the lenses.

In the present embodiment, the first side surface 51d and the second side surface 51e may have the same radius of curvature. In this case, since both side surfaces can be supported more uniformly by the alignment unit 34 for performing alignment, the alignment of the lens component 33 having the plurality of GRIN lenses 52 can be performed in a more well-balanced manner. In this case, the center Pd of the circular arc Cd that defines the first side surface 51d and the center Pe of the circular arc Ce that defines the second side surface 51e may coincide with each other, and the centers Pd and Pe may be located in the prism 51 or in any one GRIN lens 52 of the plurality of GRIN lenses 52.

In the present embodiment, each of the plurality of GRIN lenses 52 has the second end 52n exposed at the second surface 51b. In this case, light can be more efficiently reflected by the second surface 51b.

In addition, in the optical multiplexing/demultiplexing module 1 according to the present embodiment, since the alignment of the lens component 33 is performed in a well-balanced manner, the light with each of the wavelength components that have been optically multiplexed and demultiplexed or the multiplexed light is stable. Therefore, a product with stable performance can be obtained.

In the present embodiment, the optical multiplexing/demultiplexing module 1 may further include the plurality of light receiving elements 5 corresponding to each of the plurality of GRIN lenses 52. Each of the plurality of light receiving elements 5 may be disposed to face the third surface 51c, and may receive the light that is condensed by each of the plurality of GRIN lenses 52, is reflected by the second surface 51b, and is emitted from the third surface 51c. In this case, since the alignment of the lens component 33 is performed in a well-balanced manner, the light emitted from the third surface 51c can be efficiently received by the plurality of light receiving elements 5 corresponding to each of the plurality of GRIN lenses 52. Therefore, a product with stable performance can be obtained.

Further, in the method for manufacturing the optical multiplexing/demultiplexing module 1 according to the present embodiment, the alignment of the lens component 33 is performed while supporting both side surfaces thereof using the lens component 33 of which the first side surface 51d and the second side surface 51e have a curved surface shape and the alignment unit 34 that has the lens accommodating portion 36 corresponding to both curved side surfaces having the curved surface shape. In this case, both side surfaces of the lens component 33 can be used as the reference surface for alignment. As a result, according to the method for manufacturing the optical multiplexing/demultiplexing module 1, the alignment of the lens component 33 having the plurality of GRIN lenses 52 can be performed in a well-balanced manner. Further, in this embodiment, the lens accommodating portion 36 of the alignment unit 34 has the curved surface portion 35 corresponding to the first side surface 51d and the second side surface 51e. In this case, since the alignment is performed between the curved surfaces, the alignment of the lens component 33 can be performed more precisely, and the alignment of the lens component 33 having the plurality of GRIN lenses 52 can be performed with high accuracy.

Further, in the present embodiment, the alignment unit 34 is provided in a part of the base 30. As a result, since the alignment unit 34 is provided in the base 30 in which the collimator 31 and the optical multiplexing/demultiplexing device 32 that constitute the optical multiplexing/demultiplexing module 1 are installed, the alignment of the lens component 33 with respect to the optical multiplexing/demultiplexing device 32 can be performed with higher accuracy.

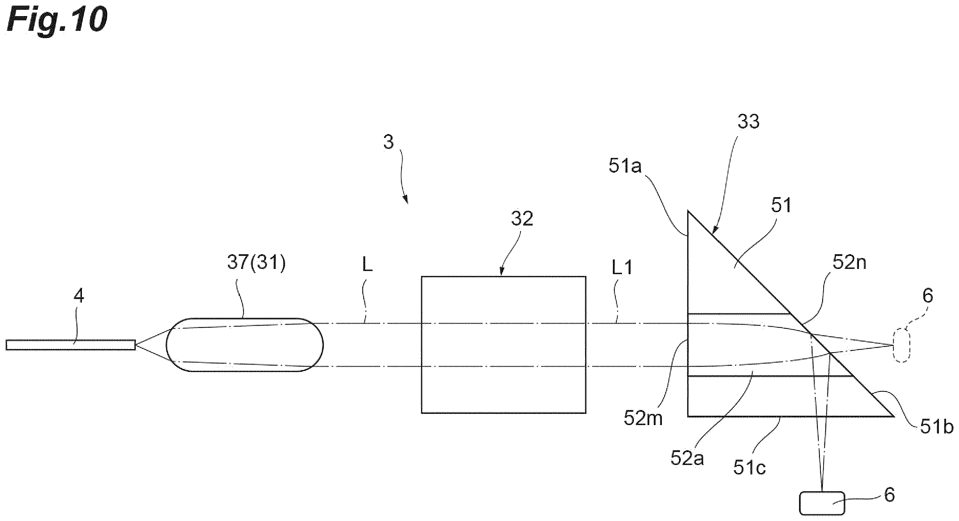

Although the embodiment of the present disclosure is described in detail above, the present disclosure is not limited to the above embodiment and can be applied to various embodiments. For example, in the embodiment described above, an aspect in which the plurality of light receiving elements 5 corresponding to the plurality of GRIN lenses 52 are provided has been illustrated, but instead of or together with the light receiving elements, the optical multiplexing/demultiplexing module 1 may include a plurality of light emitting elements 6 corresponding to the plurality of GRIN lenses (see FIG. 10). Such a plurality of light emitting elements 6 may be disposed to face the third surface 51c of the lens component 33, or may be disposed to face the second surface 51b of the lens component 33, for example. In a case where the light emitting elements 6 are disposed to face the third surface 51c, the light from the light emitting elements is input to the third surface 51c, is reflected by the second surface 51b, propagates through the plurality of GRIN lenses 52a to 52d, and is multiplexed by the optical multiplexing/demultiplexing device 32. When the light emitting elements 6 are disposed to face the second surface 51b, the light from the light emitting elements is directly input to the second surface 51b.

Further, in the embodiment described above, an aspect in which the center Pd of the circular arc Cd that defines the first side surface 51d and the center Pe of the circular arc Ce that defines the second side surface 51e are located in the prism 51 has been illustrated, but the present invention is not limited thereto. The centers Pd and Pe may be located in any one GRIN lens of the plurality of GRIN lenses 52 (for example, the center GRIN lens in the case of an odd number of GRIN lenses).

Further, in the embodiment described above, the lens accommodating portion 36 has the curved surface portion 35 that substantially coincides with the shape of the first side surface 51d and the second side surface 51e of the lens component 33, and the lens component 33 is supported by the curved surface portion 35. However, the lens accommodating portion 36 may have any shape as long as it can support the lens component 33 from the side surface and perform alignment, and is not limited to the curved surface portion 35. The lens accommodating portion 36 may be a V shape to correspond to the first side surface 51d and the second side surface 51e. Even with such a shape, alignment work can be performed while supporting the lens component 33 from both side surfaces.

Further, in the embodiment described above, an aspect in which the alignment unit 34 having the lens accommodating portion 36 is provided in a part of the base 30 has been illustrated. That is, a configuration in which the alignment unit 34 is provided in a part of the optical multiplexing/demultiplexing module 1 has been illustrated. However, the alignment unit 34 may be provided separately from the optical multiplexing/demultiplexing module 1. For example, a separate alignment jig having the same configuration as the alignment unit 34 may be used to perform the alignment of the lens component 33.

### Reference Signs List

1 Optical multiplexing/demultiplexing module
2 Optical receptacle
3 Optical multiplexer/demultiplexer
4 Optical fiber
5 Light receiving element
6 Light emitting element
30 Base
30a First end
30b Second end
30c V-shaped groove
31 Collimator
32 Optical multiplexing/demultiplexing device
33 Lens component
34 Alignment unit
35 Curved surface portion
35a Support area
35b Non-contact area
36 Lens accommodating portion
37 Collimating lens
41 Main body
42a, 42b, 42c, 42d Wavelength selection filter
43 High reflection film
51 Prism
51a First surface
51b Second surface
51c Third surface
51d First side surface
51e Second side surface
52, 52a, 52b, 52c, 52d GRIN lens
52m First end
52n Second end
Cd, Ce Circular Arc
D1 First direction
L light (wavelength multiplexed light)
L1, L2, L3, L4 Light
Pd, Pe Center

## Claims

1. A lens component comprising:
a prism including a first surface, a second surface obliquely facing the first surface, a third surface extending in a direction that intersects with the first surface and obliquely facing the second surface, and a first side surface and a second side surface connecting the first surface and the second surface to each other and facing each other; and
a plurality of GRIN lenses arranged in the prism such that each lens extends from the first surface toward the second surface,
wherein each of the plurality of GRIN lenses has a first end that is exposed at the first surface,
wherein the lens component is configured such that light input to the first end of each of the plurality of GRIN lenses is reflected by the second surface and is emitted from the third surface, or light input from the third surface and reflected by the second surface or light input to the second surface is emitted from the first end of each of the plurality of GRIN lenses, and
wherein the first side surface and the second side surface of the prism include a curved surface shape.

2. The lens component according to claim 1, wherein the first side surface and the second side surface include the same radius of curvature.

3. The lens component according to claim 2, wherein a center of a circular arc that defines the first side surface and a center of a circular arc that defines the second side surface coincide with each other, and the centers are located in the prism or in any one GRIN lens of the plurality of GRIN lenses.

4. The lens component according to any one of claims 1 to 3, wherein each of the plurality of GRIN lenses includes a second end that is exposed at the second surface.

5. The lens component according to any one of claims 1 to 4, wherein a radius of curvature of each of the first side surface and the second side surface is 0.2 mm or more and 5.0 mm or less.

6. The lens component according to any one of claims 1 to 5, wherein a diameter of each of the plurality of GRIN lenses is 0.1 mm or more and 0.6 mm or less.

7. The lens component according to any one of claims 1 to 6, wherein the shortest distance between the outermost GRIN lens of the plurality of GRIN lenses and the first side surface is 0.0 mm or more and 5.0 mm or less.

8. An optical multiplexing/demultiplexing module comprising:
a collimator configured to receive or output wavelength multiplexed light including a plurality of wavelength components;
an optical multiplexing/demultiplexing device optically coupled to the collimator and configured to demultiplex the wavelength multiplexed light into light with different wavelength components or to multiplex light with different wavelength components into the wavelength multiplexed light; and
the lens component according to any one of claims 1 to 7, which is optically coupled to the optical multiplexing/demultiplexing device.

9. The optical multiplexing/demultiplexing module according to claim 8, further comprising an alignment structure configured to support the lens component and align the plurality of GRIN lenses,
wherein the alignment structure includes a curved surface portion corresponding to a curved surface of the first side surface and the second side surface of the lens component.

10. The optical multiplexing/demultiplexing module according to claim 9,
wherein the curved surface portion of the alignment structure has a circular shape with one part cut off, and a radius of the circular shape is 0.2 mm or more and 5.0 mm or less.

11. The optical multiplexing/demultiplexing module according to claim 9 or 10,
wherein the curved surface portion of the alignment structure includes a support area that comes into contact with and supports the first side surface and the second side surface of the lens component when the alignment structure supports the lens component, and a non-contact area that does not come into contact with the lens component when the alignment structure supports the lens component.

12. The optical multiplexing/demultiplexing module according to any one of claims 8 to 11, further comprising a plurality of light receiving elements corresponding to each of the plurality of GRIN lenses,
wherein each of the plurality of light receiving elements is disposed to face the third surface, and receives the light that is condensed by each of the plurality of GRIN lenses and is reflected by the second surface.

13. The optical multiplexing/demultiplexing module according to any one of claims 8 to 11, further comprising a plurality of light emitting elements corresponding to each of the plurality of GRIN lenses,
wherein each of the plurality of light emitting elements is disposed to face the second surface or the third surface, and allows light to be input to the second surface or the third surface and the light to be emitted from each of the plurality of GRIN lenses.

14. A method for manufacturing an optical multiplexing/demultiplexing module, comprising:
preparing a collimator, an optical multiplexing/demultiplexing device, the lens component according to any one of claims 1 to 7, an alignment structure including a lens accommodating portion that includes a curved surface portion corresponding to a curved surface of the first side surface and the second side surface of the lens component, and a base;
arranging the collimator and the optical multiplexing/demultiplexing device on the base;
accommodating the lens component in the lens accommodating portion of the alignment structure such that the first side surface and the second side surface of the lens component are located in the lens accommodating portion; and
performing alignment in optical coupling of the lens component with the optical multiplexing/demultiplexing device by rotating the lens component in the lens accommodating portion.

15. The method for manufacturing the optical multiplexing/demultiplexing module according to claim 14, wherein the alignment structure is provided in a part of the base.
